# EUROPEAN PATENT SPECIFICATION

(11) **EP 0 550 220 B1**
(45) Date of publication and mention of the grant of the patent: **08.10.1997**
(21) Application number: 92311546.3
(22) Date of filing: 17.12.1992
(51) Int. Cl.: G11B 5/55, G11B 21/08

(54) **Disk drive**
Plattenspeicher
Unité de disque

(30) Priority: 17.12.1991 JP 333677/91
(43) Date of publication of application: 07.07.1993
(73) Proprietor: FUJITSU LIMITED, Kawasaki-shi, Kanagawa 211 (JP)
(72) Inventor: Katahara, Naotoshi, c/o Fujitsu Limited, Kawasaki-shi, Kanagawa 211 (JP)
(74) Representative: Godsill, John Kenneth

(56) References cited:
- EP-A- 0 355 692
- US-A- 4 835 643

## Description

The present invention relates to a disk drive, which may have a voice coil motor for driving an actuator which carries a magnetic head rotatably over the surface of a recording medium, such as a disk, in order to perform read/write operations.

It has become desirable to transfer large amounts of data at high speed in computer systems. Thus an auxiliary storage device, such as a magnetic disk drive, which can transfer large amounts of data at high speed to and from a host device is required. To meet this requirement, a magnetic disk drive, for example, may be provided with a recording medium which has a high density recording surface (for example a track pitch of less than 10 µm).

Such a magnetic disk drive generally executes a head-seek operation by moving a head of the disk drive over the disk-form recording medium to a designated target track (target cylinder) position from a current track (cylinder) position on the disk by means of an actuator. When the head is positioned over the designated target track position, data writing or reading operations can be carried out through the head. Such a head positioning control is generally performed using a digital servo system. In this case, it is also desirable that the actuator should respond to the digital servo system at high speed and should be efficient, with low power consumption.

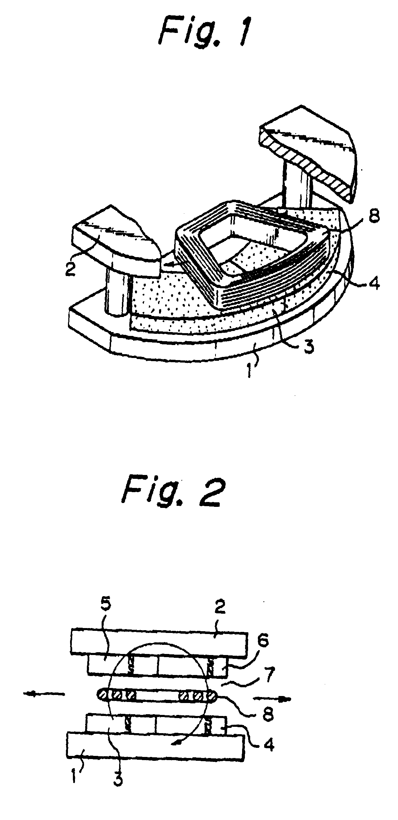

A driving source, including a voice coil motor, for driving a previously-considered actuator for a disk drive will be described with reference to Figs. 1 and 2 of the accompanying drawings.

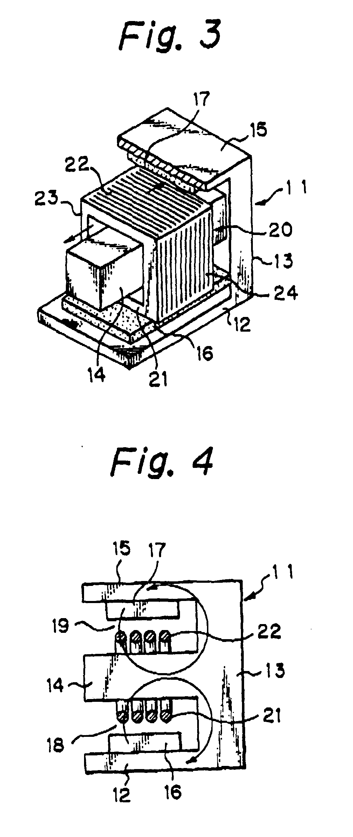

Fig. 1 shows a partly cut-away perspective view of main parts of a voice coil motor using a flat coil. Fig. 2 is a sectional schematic front view of the motor of Fig. 1, and illustrates operation of that motor. Fig. 3 is a perspective view of main parts of a voice coil motor using a square coil. Fig. 4 is an axially sectioned schematic side view of the motor of Fig. 3, and illustrates operation of that motor.

A voice coil motor using a flat coil is shown in Figs. 1 and 2 and includes a first magnet 3 and a second magnet 4 which are located on an upper surface of a lower yoke member 1, so as to face an upper yoke member 2. Similarly, a third magnet 5 and a fourth magnet 6 are placed on a lower surface of the upper yoke member 2 so as to face the lower yoke member 1 (the third and fourth magnets are not shown in Fig. 1).

The lower yoke member 1, upper yoke member 2, first magnet 3, second magnet 4, third magnet 5 and fourth magnet 6 constitute a magnetic assembly. A magnetic air gap (field) 7 is present between, on the one side, the first and second magnets 3 and 4, and on the other side, the third and fourth magnets 5 and 6.

A flat coil 8, which is mounted on an actuator that is not shown, is arranged in the magnetic air gap 7.

When an electric current flows through the coil B arranged in the magnetic air gap 7, a thrust, i.e. a moving force, is produced on the coil 8. Thus, the actuator is caused to move in either of two arrow directions in Fig. 1, by means of such a thrust.

A voice coil motor using a square coil will be described with reference to Figs. 3 and 4. A yoke member 11 comprises a lower yoke member 12 mounted on a base portion (not shown) of a disk drive, a vertical yoke member 13 extending upward from the lower yoke member 12, a middle yoke member 14 extending from the substantial centre of the vertical yoke member 13 parallel to, and in the same direction as, the lower yoke member 12, and an upper yoke member 15 extending, from the upper end of the vertical yoke member 13, parallel to, and in the same direction as, the lower yoke member 12. A first magnet 16 is located on the surface of the lower yoke member 12 facing the middle yoke member 14. A second magnet 17 is placed on the surface of the upper yoke member 15 facing the middle yoke member 14.

The lower yoke member 12, vertical yoke member 13, middle yoke member 14, and first magnet 16 constitute a first magnetic assembly. A first magnetic air gap (field) 18 exists between the first magnet 16 and the middle yoke member 14. similarly, the middle yoke member 14, vertical yoke member 13, upper yoke member 15, and second magnet 17 make up a second magnetic assembly. A second magnetic field 19 exists between the second magnet 17 and middle yoke 14.

A square coil 20 comprises a first side 21, arranged in the first magnetic field 18, a second side 22, arranged in the second magnetic field, and third and fourth sides 23 and 24 that interconnect the first and second sides 21 and 22.

When a control circuit of a servo system (not shown) supplies current to the coil 20, thrust occurs at the first side 21 and at the second side 22, thereby causing an actuator to move linearly in either of two arrow directions shown in Fig. 3.

As described above, a disk drive having a larger storage capacity and achieving access at high speed has been required in recent years. Such a larger storage capacity requirement makes it necessary to increase the number of disks and heads employed. The weight of the actuator correspondingly increases, so that the driving motor needs to provide a larger driving force. Furthermore, a driving motor having a larger driving force is needed in order to increase access speed. Possible methods for increasing the driving force of the motor without altering its principles of construction are:
(1) Increasing a magnetic field strength of a magnetic assembly;
(2) Increasing the length of the coil in a magnetic air gap;
(3) Increasing an electric current flowing through the coil.

The above-mentioned method (1) requires larger dimensions of magnets, thereby increasing the whole size of a disk drive. The method (2) requires larger dimensions of coil. The method (3) leads to an increase in power consumption.

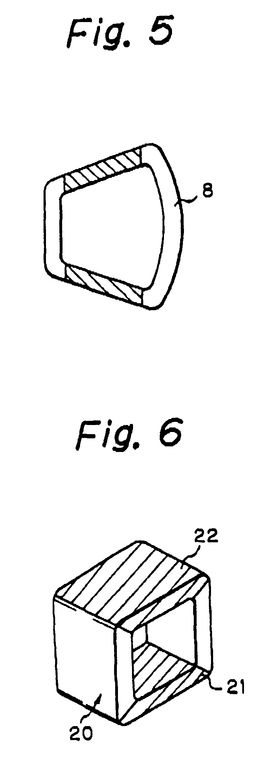

When a flat coil 8 described with reference to Figs. 1 and 2 is utilized, as illustrated in Fig. 5 thrust occurs only in about 50% of the overall length of the coil, i.e. only in those parts of the coil (hatched portions in Fig. 5) that are in the magnetic field. When the square coil described with reference to Figs. 3 and 4 is utilized, as illustrated in Fig. 6 first and second sides 21 and 22, arranged in the first and second magnetic fields 13 and 19 respectively constitute only about 50% of the overall length of the coil.

It will be seen that the disk drive of Figs. 1 and 2 comprises a rotatable actuator (not shown) and drive means which include magnet means (3, 4, 5, 6), providing a first magnetic field (7) directed substantially parallel to an axis of rotation of the actuator, and further include a coil (8), carried by the rotatable actuator for rotation therewith about the said axis, the conductor turns of which coil (8) have respective first driving portions (hatched in Fig. 5) extending substantially radially with respect to the said axis so as to cut the first magnetic field during such rotation.

According to the present invention there is provided a disk drive comprising a rotatable actuator and drive means which include magnet means, providing a first magnetic field directed substantially parallel to an axis of rotation of the actuator, and further include a coil, carried by the rotatable actuator for rotation therewith about the said axis, the conductor turns of which coil have respective first driving portions extending substantially radially with respect to the said axis so as to cut the first magnetic field during such rotation,
characterised by further magnet means, providing a second magnetic field extending substantially radially with respect to the said axis,
and in that the said conductor turns of the coil have respective second driving portions extending substantially parallel to the said axis so as to cut the second magnetic field during such rotation.

An embodiment of the present invention can provide a disk drive having a voice coil motor, for driving an actuator, which enables the actuator to move at higher speed, and to realize higher data transfer rate, than a prior disk drive in accordance with Figs. 1 and 2.

An embodiment may also provide a disk drive in which a voice coil motor enables an actuator to be controlled with lower power consumption than a prior disk drive in accordance with Figs. 1 and 2.

For a better understanding of the invention, and to show how the same may be carried into effect, reference will now be made, by way of example, to the accompanying drawings, wherein:
Fig. 1 is a perspective view of main parts of a prior voice coil motor of a magnetic disk drive;
Fig. 2 is a schematic front view of the voice coil motor of Fig. 1;
Fig. 3 is a perspective view of main parts of another previously-considered voice coil motor;
Fig. 4 is a schematic side view of the voice coil motor of Fig. 3;
Fig. 5 is a schematic plan view of the coil of Fig. 1;
Fig. 6 is a schematic perspective view of the coil of Fig. 3;

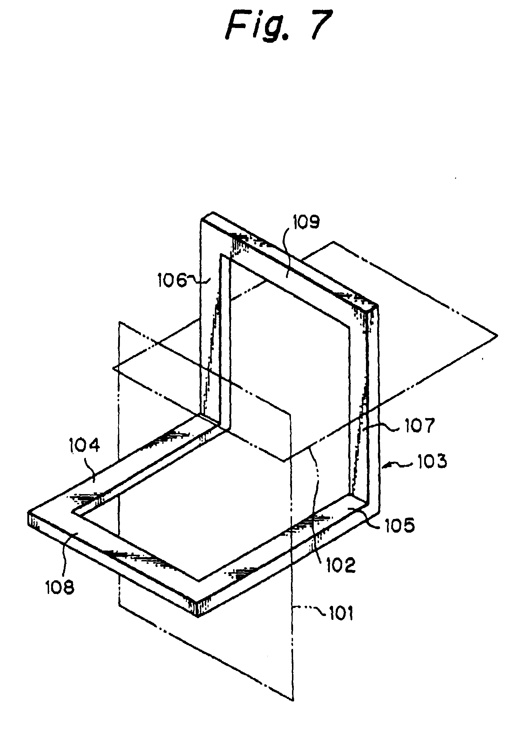

Fig. 7 shows a schematic perspective view of a coil for use in an embodiment of the present invention;

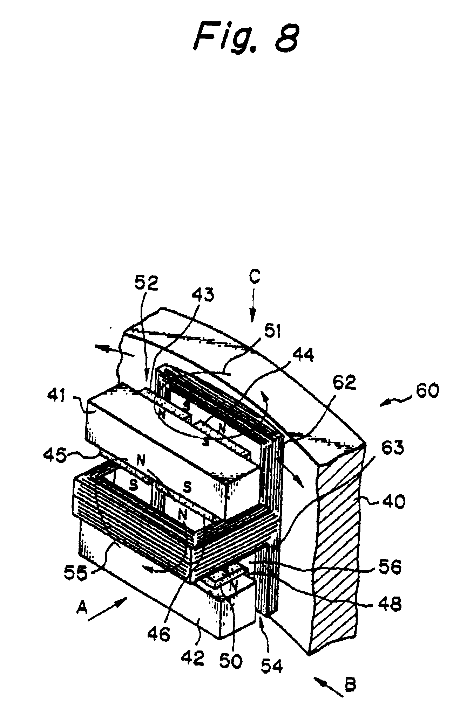

Fig. 8 shows a perspective view of parts of a magnetic disk drive embodying the present invention;

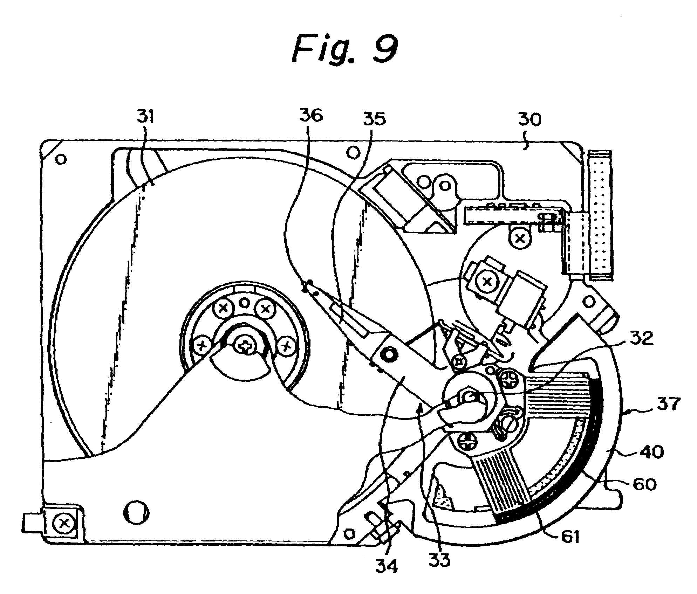

Fig. 9 is a partly cut-away plan view of the disk drive of Fig. 8;

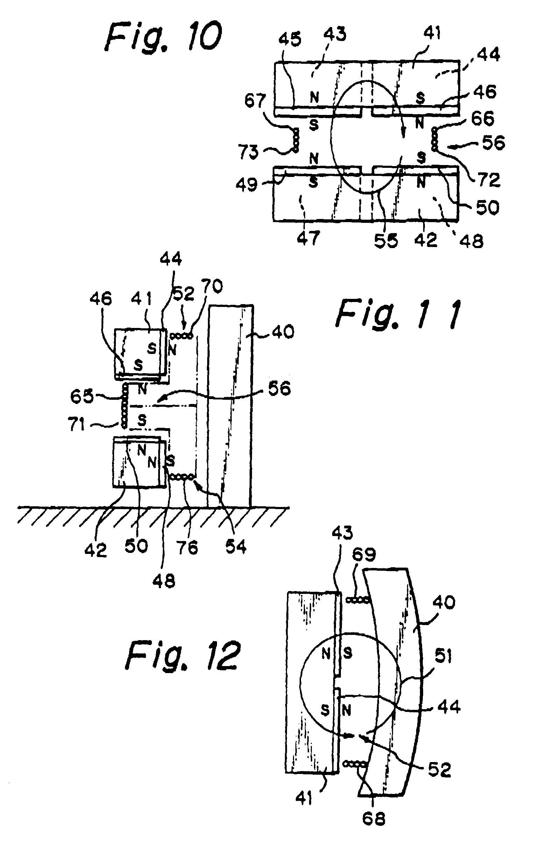

Fig. 10 is a schematic view of parts of the disk drive of Fig. 8, as seen in the direction of arrow A in Fig. 8;
Fig. 11 is a schematic view of parts of the disk drive of Fig. 8, as seen in the direction of arrow B in Fig. 8;
Fig. 12 is a schematic view of parts of the disk drive of Fig.8, as seen in the direction of arrow C in Fig. 8;

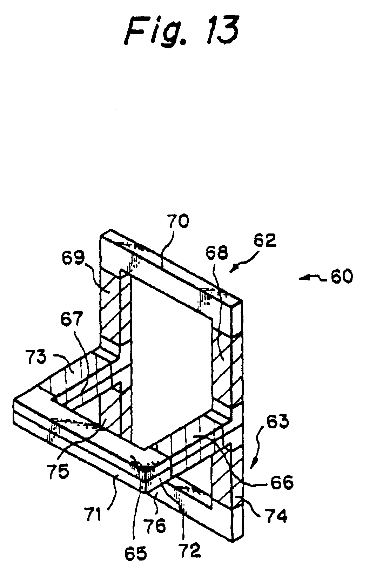

Fig. 13 is a schematic perspective view of a coil shown in Fig. 8;

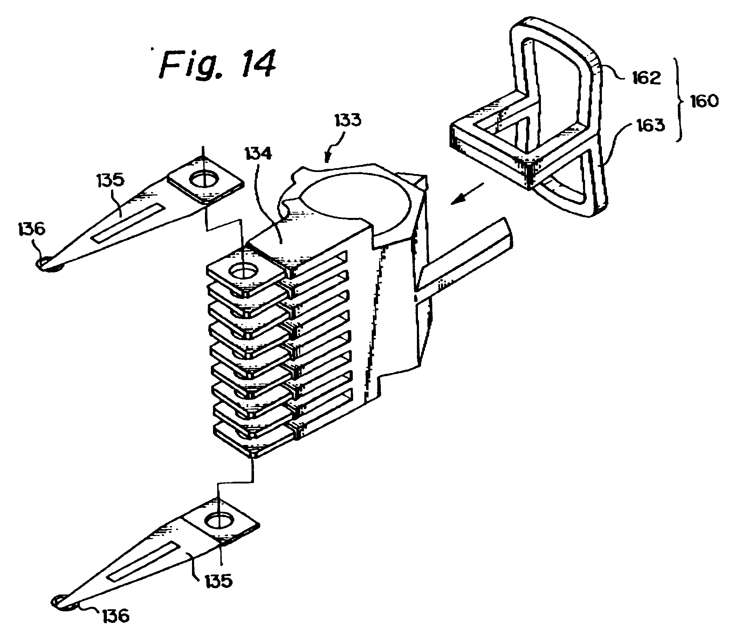

Fig. 14 is an exploded perspective view of an actuator and coil of the disk drive of Figs. 8 and 9;

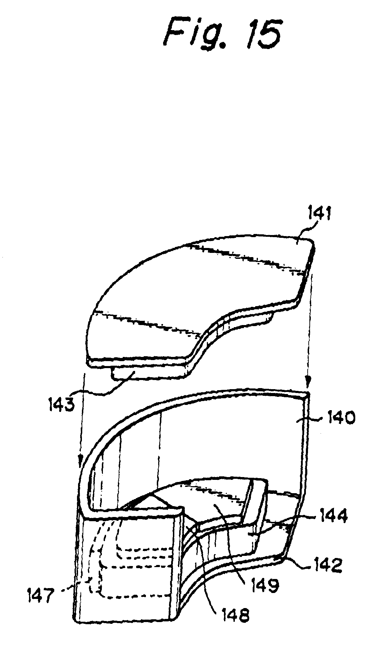

Fig. 15 is an exploded perspective view of parts of the disk drive of Fig. 9;

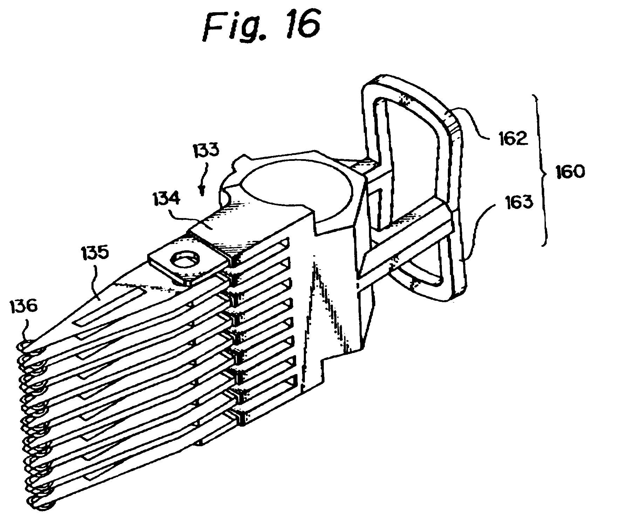

Fig. 16 is an assembled perspective view of the parts shown in Fig. 14;

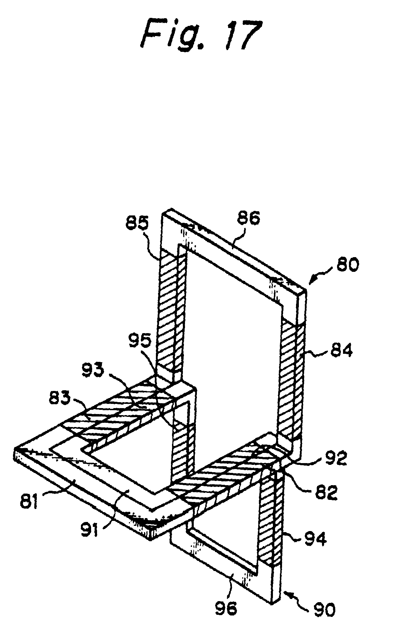

Fig. 17 is a schematic perspective view of a motor coil for use in a second embodiment of the present invention; and

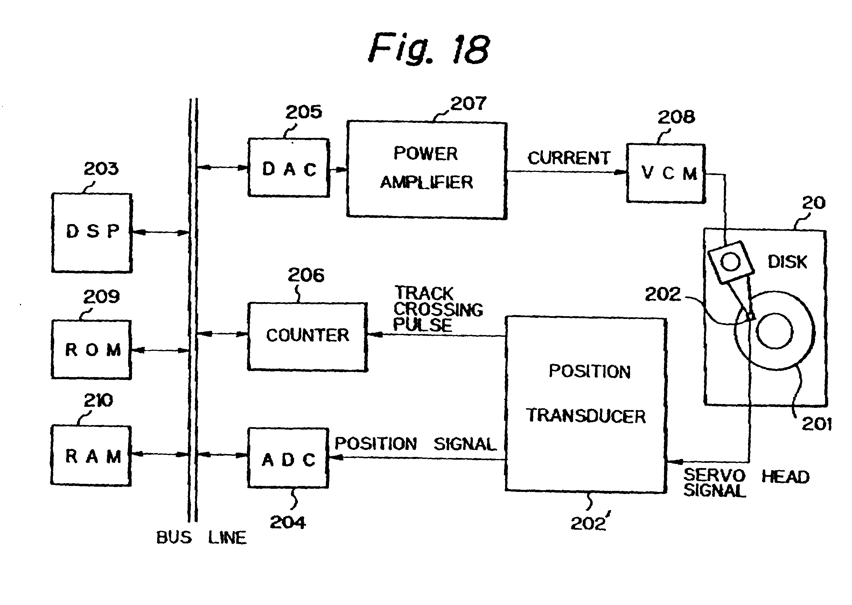

Fig. 18 is a block diagram illustrating a digital servo system for controlling a disk drive embodying the present invention.

Fig. 7 shows schematically a motor coil 103 for use in a disk drive, embodying the present invention, which provides a first magnetic field 101 directed parallel to an axis of rotation of an actuator (illustrated in Fig. 9) and a second magnetic field 102 directed substantially radially with respect to the axis of rotation of the actuator.

The turns of the coil 103 include two elongate driving portions 104 and 105, that extend substantially radially with respect to the axis of rotation of the actuator (not shown) and that are arranged in the first magnetic field 101 so as to cut that field when the coil is in use, and also include two elongate driving portions 106 and 107, that extend substantially parallel to one another and to the axis of rotation of the actuator and that are arranged in the second magnetic field 102 so as to cut that field when the actuator rotates.

When current is caused to flow around the turns of the coil 103, thrust is produced at the driving portions 104, 105, 106 and 107. Thrust is thus produced over about 67% of the overall length of the coil turns, so that the coil 103 is utilized more effectively than that of Fig. 5 (50%).

Fig. 8 is a perspective view of a voice coil motor for a disk drive embodying the present invention. Fig. 9 is a partly cut-away plan view of the disk drive having a voice coil motor 37 such as that shown in Fig. 8.

The disk drive of Fig. 9 comprises a disk 31 rotated by a spindle motor (not shown) located on a base portion of an enclosure 30.

An actuator 33 is attached to an actuator shaft 32, mounted on the base of the enclosure 30, in a rotatable manner, so that the actuator 33 can rotate about the axis of rotation of the said actuator shaft 32. A head arm 34 extends away from the shaft 32 over a recording surface of the disk 31. The head arm 34 is provided with a head suspension member 35 which carries a magnetic head 36 that is operable to read or write data from or to the disk 31.

The actuator 33 has a portion extending away from the shaft 32 in a direction substantially opposite to that of the head arm 34, which portion carries a drive coil 60 of the voice coil motor 37 of Fig. 9. The motor 37 is operable to rotate the actuator 33 about the shaft 32, in order to move the head 36 to the desired position over the disk 31.

The voice coil motor 37 will now be described with reference to Figs. 8 to 13. A first yoke member 40 is arranged to be substantially parallel with the axis of rotation of the actuator 33, and is shaped substantially like an arc having the actuator axis as its a centre. The yoke member 40 has a main surface that extends around the said axis, facing towards it over the range of rotational movement of the coil 60. The enclosure 30 (Fig. 9) has a notch (not shown) in which the first yoke member 40 is installed as part of the enclosure 30. This results in a compactly designed disk drive.

A second yoke member 41 has a first surface opposite to a first region of the said main surface of the first yoke member 40, with a space therebetween. A third yoke member 42 has a first surface opposite to a second region of the said main surface of the first yoke member 40, which second region is spaced apart from the first region of the said main surface of the member 40 in a direction along the axis of rotation of the actuator 33. The third yoke member 42 has a second (upper) surface which faces a second (lower) surface of the second yoke member 41, and is spaced therefrom in a direction along the said axis.

First and second magnets 45 and 46 are arranged on the lower surface of the second yoke member 41, and third and fourth magnets 49 and 50 are arranged on the upper surface of the third yoke member 41, so as to face respectively the first and second magnets 45 and 46 across an air gap 56.

Fifth and sixth magnets 43 and 44 are arranged on the said first surface of the second yoke member 41, so as to face the first region of the first yoke member 40 across an air gap 42. Seventh and eighth magnets 47 and 48 are arranged on the said first surface of the third yoke member 42, so as to face the said second region at the first yoke member 40 across an air gap 54.

A first magnetic field 55 exists in the air gap 56, in which the first magnetic field 55 is directed substantially parallel to the axis of rotation of the actuator 33.

A second magnetic field 51 exists in the air gap 52, and a third magnetic field 53 exists in the air gap 54. The second and third magnetic fields 51 and 53 are directed radially with respect to the axis of rotation of the actuator 33.

It will be appreciated from the drawings that each of the first, second and third magnetic fields mentioned above comprises two parts which are directed in respective opposite directions across the air gap concerned.

The coil 60 of Fig. 9 is attached to one end of the actuator 33 using a bracket 61. As shown in Fig. 13, the coil 60 is an integrated unit comprising first and second substantially L-shaped second coils 62 and 63.

The coil 62 comprises first and second elongate parts 66 and 67 which extend substantially radially with respect to the axis of rotation of the actuator and which are spaced apart laterally from one another. Third and fourth elongate parts 68 and 69 of the coil 62 extend substantially parallel to the shaft 32 and have respective first ends connected to respective first ends of the first and second parts 66 and 67. A fifth elongate part 65 interconnects respective second ends of the first and second parts 66 and 67, and a sixth elongate part 70 interconnects respective second ends of the third and fourth elongate parts 68 and 69.

The coil 62 thus has first driving portions provided by the parts 66 and 67, and second driving portions provided by the parts 68 and 69. The first driving portions 66 and 67 are arranged to cut the first magnetic field 55 when the actuator rotates, and the second driving portion 68 and 69 are arranged to cut the second magnetic field 51 when the actuator rotates.

The second coil 63 comprises first and second elongate parts 72 and 73 which extend respectively alongside the first and second elongate parts 66 and 67 of the coil 62. Third and fourth elongate parts 74 and 75 of the coil 63 extend substantially parallel to the axis of rotation and have respective first ends connected to respective first ends of the first and second parts 72 and 73 of the coil 62 and extend downwardly from those first ends, away from the first coil 62. A fifth elongate part 71 of the coil 63 connects respective second ends of the said first and second part 76 interconnects respective second ends of the said third and fourth parts 74, 75 of the coil 63. First driving portions of the coil 63 are thus provided by the first and second elongate parts 72 and 73 thereof and are arranged in the said first magnetic field 55, and second driving portions of the coil 63 are provided by the third and fourth elongate parts 74 and 75 thereof and are arranged in the said third magnetic field 53.

The operation of such an assembly will now be described. When a control circuit (not shown) supplies current to the first coil 62, a thrust force acts on the driving portions 66 and 67 (hatched in Fig. 13) arranged in the first magnetic field 55. A thrust force also acts on the second driving portions 68 and 69 (hatched in Fig. 13) arranged in the second magnetic field 51. When current is supplied to the second coil 63, a thrust force acts on the driving portions 72 and 73, and 74 and 75 (hatched in Fig. 13) of the coil which are arranged in first and third magnetic fields 55 and 53 respectively.

The thrust forces acting on the coils 62 and 63 causes the actuator 33 to rotate (in either direction) about the axis of the actuator shaft 32. The magnetic head 36 can thereby be moved to a position over a target track of the rotating disk 31, so that data can be read from or written to the disk 31.

Each of the first and second coils 62 and 63 has six sides. A thrust force acts on four of those six sides, over about 67% of the overall length of each coil. Thus, more of the coil is effective for driving purposes than is the case with a prior art coil.

Fig. 14 shown an exploded perspective view of various components of the actuator 33 of the disk drive of Fig. 9. Fig. 15 shows an exploded perspective view of yoke members and magnets of the disk drive of Fig. 9. Fig. 16 is a perspective view of an assembled actuator and coil. In this case, as an example, a plurality of heads 136 are provided, corresponding respectively to opposite surfaces of disks in the disk drive.

The plurality of heads 136 are carried by head suspension members 135 mounted on head arms 134. The actuator 133 is rotatable about an actuator shaft (not shown).

An integrated coil 160, which includes a first coil 162 and a second coil 163, is mounted on the actuator 133, so that the head arms 134, and the coil 160 are respectively to opposite sides of the actuator shaft. Each of the first and second coils 162 and 163 takes a substantially L-shaped form, made up of one coil component extending horizontally and combined with another coil component extending vertically.
According, the common sides of two coil portions can be omitted and therefore the resulting integrated coil includes six sides, instead of eight sides.

The integrated coil 160 is arranged so that parts of the coils are located within magnetic fields produced by a plurality of magnets 147, 148 and 149 etc., in combination with a plurality of yoke members 140 to 144 as shown in Fig. 15. Four of the six sides of each of the L-shaped coils 162 and 163 are located in respective magnetic fields. Consequently, approximately 67% (approximately 4/6) of the coil 160 can contribute to driving the actuator 133.

A second coil construction for use in an embodiment of the present invention will now be described with reference to Fig. 17. The coil shown in Fig. 17 is for use with the disk drive described with reference to Fig. 9, and so only the specific coil structure will now be described.

Coils 80 and 90 shown in Fig. 17 correspond to and are of generally the same shape as the coil 62 and 63 shown in Pig. 13, and so a detailed description will be omitted. The coil structure of Fig. 17 differs from that of Fig. 13 in that horizontal sides of the coil 90 are located inwardly of the horizontal sides of the coil 80 instead of below them. Thus, elongate parts 93, 92 and 91 of the coil 90 extend inwardly of, and substantially co-planar with, elongate parts 83, 82 and 81 of the coil 80. The elongate part 91 of the coil 90 is accordingly shorter than the corresponding elongate part 81 of the coil 80.

The top part 86 of the coil 80 is arranged in the magnetic field 51 (Fig. 12), and the lowermost part 96 of the coil 90 is arranged in the magnetic field gap 54 (Fig. 11).

When a control circuit (not shown) supplies a current to the coils 80 and 90, thrust is produced in the driving parts (hatched in Fig. 17) arranged to cut the magnetic fields concerned.

The thrust produced in the driving parts of the coils causes the actuator to rotate about the actuator shaft. The magnetic head is thereby moved to a target track of a rotating disk, so that reading or writing of data to or from the disk can be performed.

In such a construction, thrust is produced in four of the six sides of each of the coils 80 and 90. That is to say, thrust is produced in approximately 67% of the overall length of each coil. In this embodiment, the parts 82 and 83 of the first coil 80 are arranged side by side respectively with the parts 92 and 93 of the coil 90. The magnetic gaps in which those parts extend can therefore be made narrower that in the first embodiment of Fig. 8. This can result in a larger thrust.

Although the described embodiments relate to magnetic disk drives, an embodiment of this invention can, alternatively, be applied to an optical disk drive.

In order to facilitate understanding of a seek operation of a magnetic head, a digital servo system for head positioning is illustrated in Fig. 18.

Fig. 18 shows the configuration of a digital servo system for head positioning of a magnetic disk drive 20 including a plurality of disks. A servo pattern is pre-recorded on a servo disk surface for dedicated servo systems, and on a part of the sectors of a data disk for sector servo systems. The servo pattern (servo head signal) is output from a head 202 and is transformed to analog position signals and track crossing pulses by a position transducer 202'.

A host controller comprises a digital signal processor (DSP) 203, an analog to digital convertor (ADC) 204, a digital to analog convertor (DAC) 205 and a counter 206. The drive signal output from the controller is converted to a current by a power amplify 207 and the current drives a voice call motor (VCM) 208.

The servo system for head positioning is connected to a host controller through a bus line. Further, a ROM 209 and a RAM 210 are also connected to the bus line.

In this head positioning system, each head 202 is adapted to be positioned on the target track of a disk surface rapidly, so that accurate read/write operations can be performed at high speed.

## Claims

1. A disk drive comprising a rotatable actuator (33) and drive means (37) which include magnet means (49, 45, 46, 50), providing a first magnetic field directed substantially parallel to an axis (32) of rotation of the actuator (33), and further include a coil (62, 80), carried by the rotatable actuator (33) for rotation therewith about the said axis, the conductor turns of which coil (62, 80) have respective first driving portions (66, 67) extending substantially radially with respect to the said axis so as to cut the first magnetic field during such rotation,
characterised by further magnet means (43, 44), providing a second magnetic field extending substantially radially with respect to the said axis (32),
and in that the said conductor turns of the coil have respective second driving portions (68, 69) extending substantially parallel to the said axis so as to cut the second magnetic field during such rotation.

2. A disk drive as claimed in claim 1, wherein the said coil (62, 80) comprises first and second elongate parts (66, 67) extending substantially radially with respect to the said axis (32) and spaced apart laterally from one another, third and fourth elongate parts (68, 69) extending substantially parallel to the said axis and having respective first ends connected to respective first ends of the said first and second parts, a fifth elongate part (65) interconnecting respective second ends of the said first and second parts (66, 67), and a sixth elongate part (70) interconnecting respective second ends of the said third and fourth elongate parts (68, 69), the said first driving portions being provided by the said first and second elongate parts (66, 67), and the said second driving portions being provided by the said third and fourth elongate parts (68, 69).

3. A disk drive as claimed in claim 2, wherein the said first and second elongate parts (66, 67) project, from the said third and fourth elongate parts (68, 69), towards the said axis (32).

4. A disk drive as claimed in claim 2 or 3, wherein the said drive means (37) include additional magnet means (47, 48), providing a third magnetic field extending substantially radially with respect to the said axis (32), and further include a second coil (63) carried by the said actuator for rotation therewith about the said axis, which second coil (63) comprises first and second elongate parts (72, 73) extending respectively alongside the first and second elongate parts (66, 67) of the coil (62) of claim 1, third and fourth elongate parts (74, 75) extending substantially parallel to the said axis and having respective first ends connected to respective first ends of the said first and second parts (72, 73) of the second coil and extending from those first ends in the direction away from the coil (62) of claim 1, a fifth elongate part (71) interconnecting respective second ends of the said first and second parts (72, 73) of the second coil, and a sixth elongate part (76) interconnecting respective second ends of the said third and fourth parts (74, 75) of the second coil, first driving portions of the second coil being provided by the first and second elongate parts (72, 73) thereof in the said first magnetic field, and second driving portions of the second coil being provided by the said third and fourth elongate parts (74, 75) thereof in the said third magnetic field.

5. A disk drive as claimed in claim 4, wherein the said first, second and fifth elongate parts (93, 92, 91) of the said second coil (90) extend inwardly of, and substantially coplanar with, the said first, second and fifth elongate parts (83, 82, 81) of the coil (80) of claim 1, the said fifth elongate part (91) of the said second coil (90) being shorter than the fifth elongate part (81) of the coil (80) of claim 1.

6. A disk drive as claimed in claim 4 or 5, wherein the said sixth elongate part (70) of the coil (62) of claim 1 extends in the said second magnetic field, and wherein the said sixth elongate part (76) of the said second coil (63) extends in the said third magnetic field.

7. A disk drive as claimed in claim 4, 5 or 6, including:
a first magnetic yoke member (40), which extends substantially parallel to the said axis (32) and has a main surface that faces towards the said axis and extends therearound over the range of rotational movement of the two coils (62, 63);
a second magnetic yoke member (41), having a first surface opposite to a first region of the said main surface of the first yoke member (40); and
a third magnetic yoke member (42), having a first surface opposite to a second region of the main surface of the first yoke member (40), which second region is spaced from the said first region in a direction along the said axis (32), the third yoke member having a second surface which faces a second surface of the said second yoke member and is spaced therefrom in the said direction along the said axis (32);
wherein the said magnet means providing the said first magnetic field comprise first and second magnets (45, 46) arranged on the said second surface of the said second yoke member (41), and third and fourth magnets (49, 50) arranged on the said second surface of the said third yoke member (42) so as to face respectively the said first and second magnets across an air gap (56), containing the said first magnetic field, in which the said first driving portions (66, 67, 72, 73) of the two coils are movable;
and wherein the said further magnet means providing the said second magnetic field comprise fifth and sixth magnets (43, 44), arranged on the said first surface of the said second yoke member (41) so as to face the said first region of the said main surface of the first yoke member (40) across an air gap (52), containing the said second magnetic field, in which the said second driving portions (68, 69) of the said coil (62) of claim 1 are movable;
and wherein the said additional magnet means providing the said third magnetic field comprise seventh and eighth magnets (47, 48), arranged on the said first surface of the said third yoke member (42) so as to face the said second region of the said main surface of the first yoke member (40) across an air gap (54), containing the said third magnetic field, in which the said second driving portions (74, 75) of the said second coil (63) are movable.

## Patentansprüche

1. Diskettenlaufwerk, welches einen drehbaren Stellantrieb (33) sowie Antriebsmittel (37) aufweist, welche Magnetmittel (49, 45, 46, 50) umfassen, die ein erstes Magnetfeld bilden, das im wesentlichen parallel zu einer Drehachse (32) des Stellantriebes (33) ausgerichtet ist, und die ferner eine Spule (62, 80) umfassen, die von dem drehbaren Stellantrieb (33) für eine Drehung mit demselben um die genannte Achse gehalten wird, wobei die Leiterwindungen dieser Spule (62, 80) jeweilige erste Antriebsabschnitte (66, 67) haben, die sich im wesentlichen radial mit Bezug auf die genannte Achse erstrecken, so daß sie das erste Magnetfeld während einer derartigen Drehung schneiden,
**gekennzeichnet** durch weitere Magnetmittel (43, 44), die ein zweites Magnetfeld erzeugen, das sich im wesentlichen radial bezüglich der genannten Achse (32) erstreckt,
und dadurch, daß die Leiterwindungen der Spule jeweilige zweite Antriebsabschnitte (68, 69) haben, die sich im wesentlichen parallel zu der genannten Achse erstrecken, so daß sie das zweite Magnetfeld während einer solchen Drehung schneiden.

2. Diskettenlaufwerk nach Anspruch 1, bei welchem die Spule (62, 80) erste und zweite längliche Teile (66, 67) aufweist, die sich im wesentlichen radial bezüglich der genannten Achse (32) erstrecken und seitlich voneinander beabstandet sind, ferner dritte und vierte längliche Teile (68, 69) die sich im wesentlichen parallel zu der genannten Achse erstrecken und jeweilige erste Enden aufweisen, die mit jeweiligen ersten Enden der ersten und zweiten Teile verbunden sind, weiter einen fünften länglichen Teil (65), welcher jeweilige zweite Enden der ersten und zweiten Teile (66, 67) miteinander verbindet, und ein sechstes längliches Teil (70), welches jeweilige zweite Enden der dritten und vierten länglichen Teile (68, 69) miteinander verbindet, wobei die ersten Antriebsabschnitte durch die ersten und zweiten länglichen Teile (66, 67) gebildet werden, und die zweiten Antriebsabschnitte durch die dritten und vierten länglichen Teile (68, 69) gebildet werden.

3. Diskettenlaufwerk nach Anspruch 2, bei welchem die ersten und zweiten länglichen Teile (66, 67) von den dritten und vierten länglichen Teilen (68, 69) aus zu der genannten Achse (32) hin vorstehen.

4. Diskettenlaufwerk nach einem der Ansprüche 2 oder 3, bei welchem die Antriebsmittel (37) zusätzliche Magnetmittel (47, 48) umfassen, die ein drittes Magnetfeld erzeugen, welches sich im wesentlichen radial bezüglich der genannten Achse (32) erstreckt, und ferner eine zweite Spule (63) umfassen, welche von dem Stellantrieb für eine Drehung mit demselben um die genannte Achse gehalten wird, wobei die zweite Spule (63) erste und zweite längliche Teile (72, 73) aufweist, die sich jeweils entlang der ersten und zweiten länglichen Teile (66, 67) der Spule (62) gemäß Anspruch 1 erstrecken, ferner dritte und vierte längliche Teile (74, 75), die sich im wesentlichen parallel zu der genannten Achse erstrecken und jeweilige erste Enden haben, die mit jeweiligen ersten Enden der ersten und zweiten Teile (72, 73) der zweiten Spule verbunden sind und sich von diesen ersten Enden in der Richtung weg von der Spule (62) gemäß Anspruch 1 erstrecken, ferner ein fünftes längliches Teil (71), welches jeweilige zweite Enden der ersten und zweiten Teile (72, 73) der zweiten Spule miteinander verbindet, und ein sechstes längliches Teil (76), welches jeweilige zweite Enden der dritten und vierten Teile (74, 75) der zweiten Spule miteinander verbindet, wobei erste Antriebsabschnitte der zweiten Spule durch die ersten und zweiten länglichen Teile (72, 73) derselben in dem ersten Magnetfeld gebildet werden, und zweite Antriebsabschnitte der zweiten Spule durch die dritten und vierten länglichen Teile (74, 75) derselben in dem dritten Magnetfeld gebildet werden.

5. Diskettenlaufwerk nach Anspruch 4, bei welchem die ersten, zweiten und fünften länglichen Teile (93, 92, 91) der zweiten Spule (90) sich innerhalb von und im wesentlichen koplanar mit den ersten, zweiten und fünften länglichen Teilen (83, 82, 81) der Spule (80) gemäß Anspruch 1 erstrecken, wobei das fünfte längliche Teil (91) der zweiten Spule (90) kürzer als das fünfte längliche Teil (81) der Spule (80) gemäß Anspruch 1 ist.

6. Diskettenlaufwerk nach Anspruch 4 oder 5, bei welchem das sechste längliche Teil (70) der Spule (62) gemäß Anspruch 1 sich in dem zweiten Magnetfeld erstreckt, und bei welchem das sechste längliche Teil (76) der zweiten Spule (63) sich in dem dritten Magnetfeld erstreckt.

7. Diskettenlaufwerk nach einem der Ansprüche 4, 5 oder 6, umfassend:
ein erstes magnetisches Jochglied (40), welches sich im wesentlichen parallel zu der genannten Achse (32) erstreckt und eine Hauptoberfläche hat, die der genannten Achse zugewandt ist und sich um diese herum über den Bereich der Drehbewegung der beiden Spulen (62, 63) erstreckt;
ein zweites magnetisches Jochglied (41), welches eine erste Oberfläche hat, die einer ersten Region der Hauptoberfläche des Jochgliedes (40) gegenüberliegt; und
ein drittes magnetisches Jochglied (42), welches eine erste Oberfläche hat, die einer zweiten Region der Hauptoberfläche des ersten Jochgliedes (40) gegenüberliegt, wobei die zweite Region von der ersten Region in einer Richtung entlang der genannten Achse (32) beabstandet ist, wobei das dritte Jochglied eine zweite Oberfläche hat, die einer zweiten Oberfläche des zweiten Jochgliedes zugewandt ist und von dieser in der Richtung entlang der genannten Achse (32) beabstandet ist;
wobei die das erste Magnetfeld erzeugende Magnetmittel erste und zweite Magneten (45, 46) aufweisen, die auf der zweiten Oberfläche des zweiten Jochgliedes (41) angeordnet sind, sowie dritte und vierte Magneten (49, 50), die auf der zweiten Oberfläche des dritten Jochgliedes (42) so angeordnet sind, daß sie jeweils den ersten und zweiten Magneten über einen Luftspalt (56) hinweg zugewandt sind, welcher das erste Magnetfeld enthält, in welchem die ersten Antriebsabschnitte (66, 67, 72, 73) der beiden Spulen beweglich sind;
und wobei die weiteren, das zweite Magnetfeld erzeugenden Magnetmittel fünfte und sechste Magneten (43, 44) aufweisen, die auf der ersten Oberfläche des zweiten Jochgliedes (41) so angeordnet sind, daß sie der ersten Region der Hauptoberfläche des ersten Jochgliedes (40) über einen Luftspalt (52) hinweg zugewandt sind, welcher das zweite Magnetfeld enthält, in welchem die zweiten Antriebsabschnitte (68, 69) der Spule (62) gemäß Anspruch 1 bewegbar sind,
und wobei die zusätzlichen, das dritte Magnetfeld erzeugenden Magnetmittel siebente und achte Magneten (47, 48) aufweisen, die auf der ersten Oberfläche des dritten Jochgliedes (42) so angeordnet sind, daß sie der zweiten Region der Hauptoberfläche des ersten Jochgliedes (40) über einen Luftspalt (54) hinweg zugewandt sind, welcher das dritte Magnetfeld enthält, in welchem die zweiten Antriebsabschnitte (74, 75) der zweiten Spule (63) bewegbar sind.

## Revendications

1. Lecteur de disque comprenant un actionneur tournant (33) et un moyen d'entraînement (37) comprenant des moyens d'aimant (49, 45, 46, 50) constituant un premier champ magnétique pratiquement parallèle à un axe (32) de rotation de l'actionneur (33) et comprenant, de plus, un bobinage (62, 80) porté par l'actionneur tournant (33) pour une rotation conjointe selon ledit axe, les tours de conducteur du bobinage (62, 80) ont des premières parties d'entraînement (66, 67) respectives s'étendant pratiquement radialement par rapport audit axe de façon à couper le premier champ magnétique lors d'une telle rotation,
lecteur caractérisé par des moyens supplémentaires d'aimant (43, 44) fournissant un second champ magnétique s'étendant pratiquement radialement par rapport audit axe (32), et en ce que lesdits tours de conducteur du bobinage ont des secondes parties d'entraînement (68, 69) respectives s'étendant pratiquement parallèles audit axe de façon à couper le second champ magnétique lors d'une telle rotation.

2. Lecteur de disque selon la revendication 1, dans lequel ledit bobinage (62, 80) comprend des première et seconde parties allongées (66, 67) s'étendant pratiquement radialement par rapport audit axe (32) et espacées latéralement l'une de l'autre, des troisième et quatrième parties allongées (68, 69) s'étendant pratiquement parallèles audit axe et possédant des premières extrémités respectives raccordées aux premières extrémités respectives desdites première et seconde parties, une cinquième partie allongée (65) raccordant des secondes extrémités respectives desdites (66, 67), et une sixième partie allongée (70) raccordant des secondes extrémités respectives desdites troisième et quatrième parties allongées (68, 69), lesdites premières parties d'entraînement étant constituées par lesdites première et seconde parties allongées (66, 67) et lesdites secondes parties d'entraînement étant constituées par lesdites troisième et quatrième parties allongées (68, 69).

3. Lecteur de disque selon la revendication 2, dans lequel lesdites première et seconde parties allongées (66, 67) se projettent à partir desdites troisième et quatrième parties allongées (68, 69) vers ledit axe (32).

4. Lecteur de disque selon la revendication 2 ou 3, dans lequel ledit moyen d'entraînement (37) comprend des moyens additionnels d'aimant (47, 48) fournissant un troisième champ magnétique s'étendant pratiquement radialement par rapport audit axe (32) et de plus, un second bobinage (63) porté par ledit actionneur pour une rotation selon ledit axe, ledit second bobinage (63) comprend des première et seconde parties allongées (72, 73) s'étendant respectivement le long des côtés des première et seconde parties allongées (66, 67) du bobinage (62) selon la revendication 1, des troisième et quatrième parties allongées (74, 75) s'étendant pratiquement parallèles audit axe et possédant des premières extrémités respectives raccordées aux premières extrémités respectives desdites première et seconde parties allongées (72, 73) du second bobinage et s'étendant de ces premières extrémités à l'écart du bobinage (62) selon la revendication 1, une cinquième partie allongée (71) raccordant des secondes extrémités respectives desdites première et seconde parties allongées (72, 73) du second bobinage, et une sixième partie allongée (76) raccordant des secondes extrémités respectives desdites troisième et quatrième parties allongées (74, 75) du second bobinage, les premières parties d'entraînement du second bobinage étant constituées par les première et seconde parties allongées (72, 73) dans ledit premier champ magnétique et les secondes parties d'entraînement du second bobinage étant constituées par lesdites troisième et quatrième parties allongées (74, 75) dans ledit troisième champ magnétique.

5. Lecteur de disque selon la revendication 4, dans lequel lesdites première, seconde et cinquième parties allongées (93, 92, 91) dudit second bobinage (90) s'étendent vers l'intérieur de façon pratiquement coplanaire auxdites première, seconde et cinquième parties allongées (83, 82, 81) du bobinage (80) selon la revendication 1, ladite cinquième partie allongée (91) dudit second bobinage (90) étant plus courte que la cinquième partie allongée (81) du bobinage (80) selon la revendication 1.

6. Lecteur de disque selon la revendication 4 ou 5, dans lequel ladite sixième partie allongée (70) du bobinage (62) selon la revendication 1 s'étend dans ledit second champ magnétique, et dans lequel ladite sixième partie allongée (76) dudit second bobinage (63) s'étend dans ledit troisième champ magnétique.

7. Lecteur de disque selon la revendication 4, 5 ou 6, comprenant :
- un première pièce magnétique d'étrier (40) s'étendant pratiquement parallèle audit axe (32) et possédant une surface principale tournée vers ledit axe et s'étendant sur un intervalle de déplacement en rotation des deux bobinages (62, 63);
- un seconde pièce magnétique d'étrier (41) possédant une première surface opposée à une première zone de ladite surface principale de la première pièce magnétique d'étrier (40); et
- une troisième pièce magnétique d'étrier (42) possédant une première surface opposée à une seconde zone de la surface principale de la première pièce magnétique d'étrier (40), seconde zone qui est espacée de ladite première zone dans une direction selon ledit axe (32), la troisième pièce magnétique d'étrier (42) possédant une seconde surface tournée vers une seconde surface de ladite seconde pièce magnétique d'étrier (41) et espacée dans ladite direction selon ledit axe (32);
lecteur dans lequel ledit moyen d'aimant constituant ledit premier champ magnétique comprend des premier et second aimant (45, 46) agencés sur ladite seconde surface de ladite (41), et des troisième et quatrième aimants (49, 50) agencés sur ladite seconde surface de ladite troisième pièce magnétique d'étrier (42) de façon à faire face respectivement auxdits premier et second aimants dans un intervalle d'air (56) contenant ledit premier champ magnétique, dans lequel lesdites premières parties d'entraînement (66, 67, 72, 73) des deux bobinages sont mobiles; et
dans lequel ledit moyen d'aimant supplémentaire fournissant ledit second champ magnétique comprend des moyens supplémentaires d'aimant (43, 44) agencés sur ladite première surface de ladite seconde pièce magnétique d'étrier (41) de façon à faire face à ladite première zone de ladite surface principale de la première pièce magnétique d'étrier (40) dans un intervalle d'air (52), contenant ledit second champ magnétique dans lequel lesdites troisième et quatrième parties allongées (68, 69) dudit bobinage (62) selon la revendication 1 sont mobiles; et
dans lequel ledit moyen d'aimant additionnel fournissant ledit troisième champ magnétique comprend des moyens additionnels d'aimant (47, 48) agencés sur ladite première surface de ladite troisième pièce magnétique d'étrier (42) de façon à faire face à ladite seconde zone de ladite surface principale de la première pièce magnétique d'étrier (40) dans un intervalle d'air (54) contenant ledit troisième champ magnétique dans lequel lesdites troisième et quatrième parties allongées (74, 75) dudit second bobinage (63) sont mobiles.
